# EUROPEAN PATENT SPECIFICATION

(11) **EP 3 002 086 B1**
(45) Date of publication and mention of the grant of the patent: **26.09.2018**
(21) Application number: 15187085.4
(22) Date of filing: 28.09.2015
(51) Int. Cl.: B25J 9/04, B25J 19/00, B25J 13/08

(54) **ROBOT**
ROBOTER
ROBOT

(30) Priority: 30.09.2014 JP 2014200032
(43) Date of publication of application: 06.04.2016
(73) Proprietor: Seiko Epson Corporation, Shinjuku-ku Tokyo 163-0811 (JP)
(72) Inventor: Kawase, Tetsuya, Nagano 392-8502 (JP); Sakurada, Jun, Nagano 392-8502 (JP)
(74) Representative: Hoffmann Eitle

(56) References cited:
- EP-A2- 2 703 130
- EP-A2- 2 703 132
- WO-A1-2010/019310
- JP-A- 2012 171 051
- US-A1- 2004 149 064
- US-A1- 2010 258 626

## Description

### BACKGROUND

### 1. Technical Field

The present invention relates to a robot, and specifically to a structure of a manipulator of the robot.

### 2. Related Art

In related art, in an articulated robot, an arm closer to a base houses a larger number of flexible connecting members such as electric wires and air pipes. For downsizing of a manipulator, the part layout within the arm is tighter. The parts housed in an arm include a motor, a pulley, a pulley belt, an inertial sensor for detection of angular velocity and acceleration, a backup circuit that stores positions of the arm, a battery for the backup circuit, etc.

When an inertial sensor is provided in an arm closest to a base, interferences between the inertial sensor and connecting members are problematic. For example, for an inertial sensor that detects an angular velocity and acceleration from an extremely weak electric signal, electromagnetic noise from an electric wire as a generation source is problematic. Particularly, the flexible connecting members are twisted and moved with rotation of the arm, and the electromagnetic noise is likely to increase.

EP-A2-2 703 132 discloses a robot according to the preamble of claim 1.

### SUMMARY

The object of the invention is to reduce noise of an inertial sensor due to an influence of a connecting member.

A robot according to the invention includes the features recited in claim 1.

According to the invention, the route of the connecting member is determined by the fixing member, and thereby, the connecting member collecting toward the base is not in contact with the inertial sensor provided in the interior of the arm closest to the base. Therefore, noise of the inertial sensor due to the influence of the connecting member may be reduced. Here, the connecting member can be a flexible connecting member, wherein the term "flexible connecting member" refers to a member having flexibility that enables deformation in response to the movement of the arm for electrically or mechanically connecting two or more functional components and including e.g. an electric wire or an air tube.

### BRIEF DESCRIPTION OF THE DRAWINGS

The invention will be described with reference to the accompanying drawings, wherein like numbers reference like elements.
Fig. 1A is a side view according to an embodiment of the invention. Fig. 1B is a plan view according to the embodiment of the invention.
Fig. 2 is a sectional view along line B-B shown in Fig. 1B.
Fig. 3 is a sectional view along line A-A shown in Fig. 1A.
Fig. 4 is a perspective view according to the embodiment of the invention.
Fig. 5 is a perspective view according to the embodiment of the invention.
Fig. 6 is a perspective view according to the embodiment of the invention.
Fig. 7 is a perspective view according to the embodiment of the invention.

### DESCRIPTION OF EXEMPLARY EMBODIMENTS

As below, embodiments of the invention will be explained with reference to the accompanying drawings. Note that the same signs are assigned to corresponding elements in the respective drawings, and overlapping explanation will be omitted.

### 1. Outline

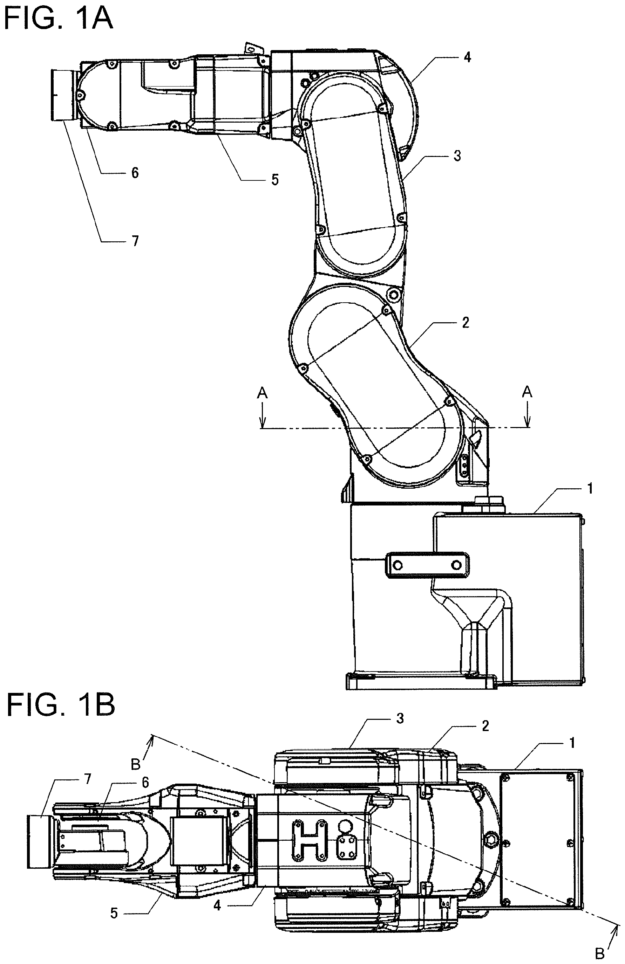

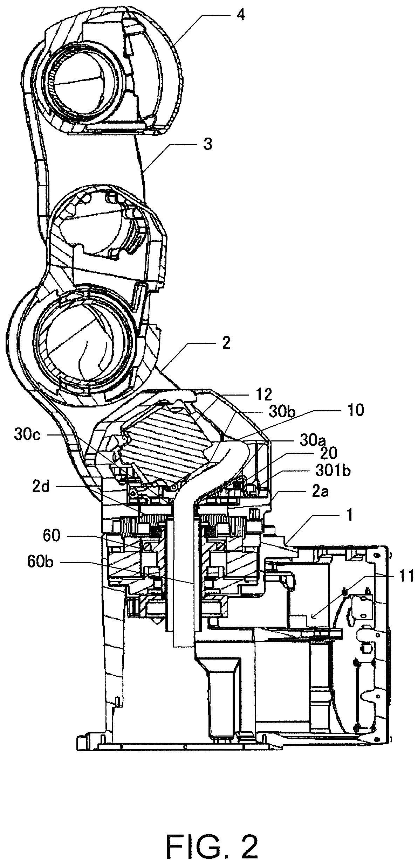

Figs. 1A and 1B show a robot as one example of the invention. The robot of the example is a vertical articulated robot having a base 1 and a manipulator including a plurality of arms 2, 3, 4, 5, 6, 7. As shown in Fig. 2, the first arm 2 closest to the base 1 houses a bundle of connecting members 10 including a plurality of linear or tubular connecting members such as electric wires and air tubes for connection of actuators, rotary encoders, and sensors housed in the respective arms 2, 3, 4, 5, 6, 7 to a drive circuit, a power supply circuit, a control circuit, and a compressor housed in the base 1. The respective connecting members have flexibility that enables deformation in response to rotations of the respective arms, and the bundle of connecting members 10 also has flexibility that enables deformation in response to rotations of the respective arms.

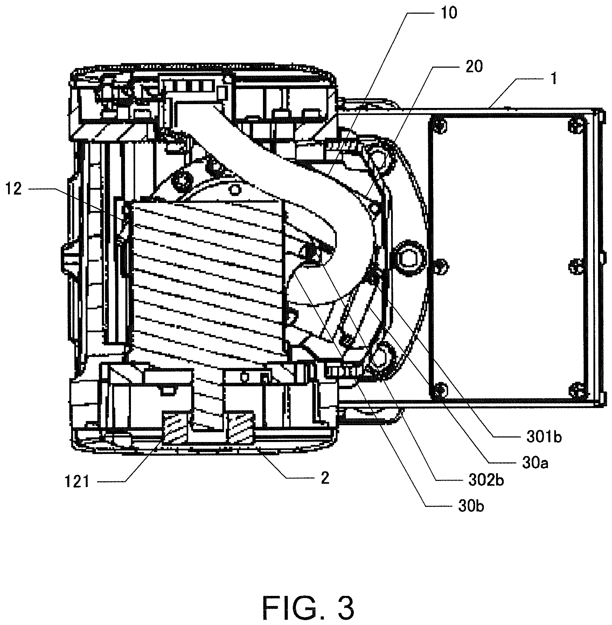

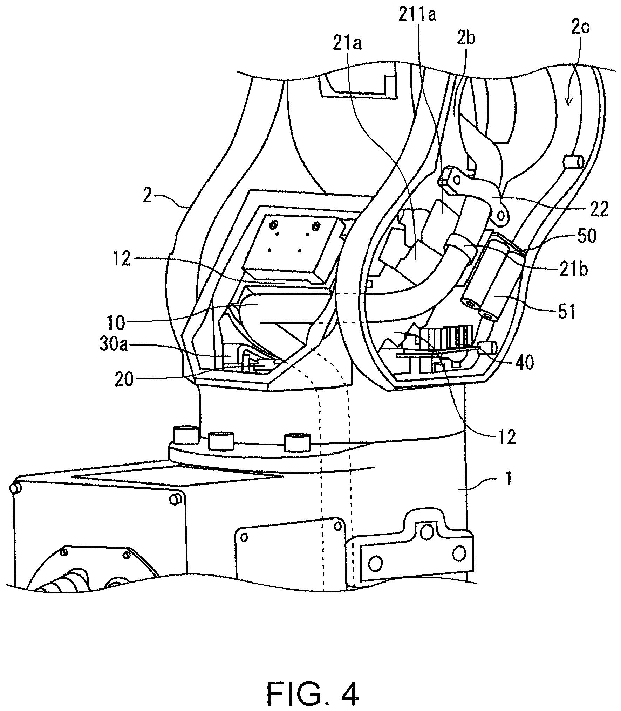

The first arm 2 houses a pulley 121, a position control unit 20, etc. as shown in Fig. 3 in addition to a motor 12 for rotating the second arm 3. The position control unit 20 includes a crystal oscillator gyroscope and is provided in a region without contact with the bundle of connecting members 10. As shown in Fig. 2, the bundle of connecting members 10 is drawn out from inside of the base 1 through a through hole 60b of a rotation shaft member 60 of the first arm 2 into the first arm 2. A fixing plate 30 is provided at the exit of the bundle of connecting members 10 from the rotation shaft member 60. The fixing plate 30 as a first fixing member includes a guide part 30a and a band part 30b. The guide part 30a guides the bundle of connecting members 10 extending from the rotation shaft member 60 to a route apart from the inner wall surface of the first arm 2. The guide part 30a of the fixing plate 30 has an inclined surface for drawing up the bundle of connecting members 10 from the rotation shaft member 60. Further, as shown in Fig. 3, the position control unit 20 is fixed in a gap between the bundle of connecting members 10 drawn up by the guide part 30a and a base member 2a of the first arm 2. Furthermore, as shown in Fig. 4, the bundle of connecting members 10 is fixed to a side wall surface 2b of the first arm 2 by a fixing plate 21 as a second fixing member. As described above, in the robot of the example, the route of the bundle of connecting members 10 is determined by the fixing plate 30 and the fixing plate 21 within the first arm 2 in which the thickness of the bundle of connecting members 10 is the largest, and thus, a ratio of a space that can be effectively used around the bundle of connecting members 10 within the first arm 2 is larger than that in related art. Accordingly, the position control unit 20 may be housed within the first arm 2 without interference with the bundle of connecting members 10. Further, a backup circuit board 40 and a battery holding part 50 that holds a battery 51 of the backup circuit board 40 are housed in a region in which maintenance is easy from outside of the first arm 2 using the space around the bundle of connecting members 10.

### 2. Configuration

As shown in Fig. 2, in the base 1, a drive part 11 that rotates the first arm 2 with the rotation shaft member 60 with respect to the base 1 is provided. The drive part 11 contains the motor, the pulley, the pulley belt, etc. Further, the base 1 houses the drive circuit, the power supply circuit, the control circuit, and the compressor (not shown). The connecting members such as electric wires and air tubes extend from these drive circuit, power supply circuit, control circuit, and compressor, and the bundle of connecting members 10 binding the plurality of connecting members is fixed within the base 1 by the fixing plate 30.

The rotation shaft member 60 of the first arm 2 has the through hole 60b for communication between the interior of the base 1 and the interior of the first arm 2, and is supported by the base 1 via a bearing. The center axis of the rotation shaft member 60 and the center axis of the through hole 60b are aligned. The bundle of connecting members 10 passes the through hole 60b of the rotation shaft member 60. The rotation shaft member 60 is fixed to the base member 2a of the first arm 2 by screws (not shown), and rotates with the first arm 2.

A region corresponding to a bottom surface of the inner wall surface of the first arm 2 is a base surface 2d of the first arm 2. The base surface 2d is lower in the center part having an opening and higher in the peripheral edge part. The opening formed in the center part of the base surface 2d overlaps with the through hole 60b of the rotation shaft member 60 as seen from a direction of the center axis of the rotation shaft member 60. Specifically, the through hole 60b of the rotation shaft member 60 is located within the opening formed in the center part of the base surface 2d. The bundle of connecting members 10 passes the through hole 60b of the rotation shaft member 60 and the opening in the center part of the base surface 2d from the interior of the base 1 to the interior of the first arm 2. The guide part 30a of the fixing plate 30 is fixed to the peripheral edge part of the base surface 2d by screws 301b.

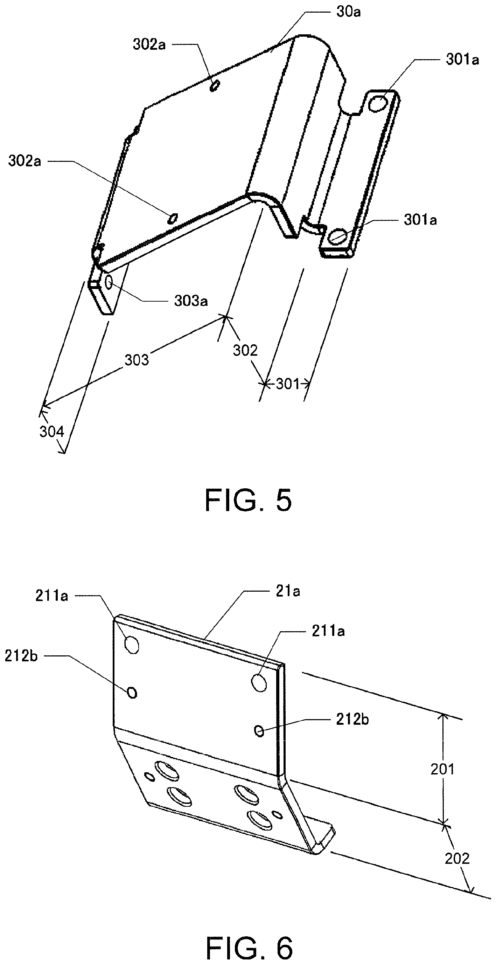

As shown in Fig. 5, the guide part 30a of the fixing plate 30 is a metal plate having four flat sections of a base section 301, a spacer section 302, a first inclined section 303, a second inclined section 304, and bent between the adjacent sections. In the base section 301, screw holes 301a for fixing the guide part 30a to the base member 2a are formed. The spacer section 302 has a height for drawing up the bundle of connecting members 10 from the base surface to a location higher than the position control unit 20. As shown in Fig. 2, the first inclined section 303 and the second inclined section 304 bend according to a direction in which the bundle of connecting members 10 drawn up from the through hole 60b of the rotation shaft member 60 is extended within the first arm 2. The direction in which the bundle of connecting members 10 is extended within the first arm 2 may be set so that the bundle of connecting members 10 may pass through between the motor 12 and the position control unit 20 as shown in Fig. 4. In the first inclined section 303 and the second inclined section 304, screw holes 302a, 303a for fixing band parts 30b, 30c are formed. The bundle of connecting members 10 is fixed along the first inclined section 303 and the second inclined section 304 by the band parts 30b, 30c.

As shown in Fig. 4, the bundle of connecting members 10 extending along the first inclined section 303 is curved to nearly 90 degrees below the motor 12 (at the base 1 side) and further extended in parallel to the rotation shaft of the motor 12 to a location and fixed to the side wall surface 2b of the first arm 2 by the fixing plate 21 in the location. The fixing plate 21 includes a guide part 21a and a band part 21b. The guide part 21a is fixed to the side wall surface 2b of the first arm 2 by screws. As shown in Fig. 6, the guide part 21a of the fixing plate 21 is a metal plate having two flat sections of a base section 201 and an inclined section 202, and bent between the adjacent sections. In the base section 201, screw holes 211a for fixing the fixing plate 21 to the side wall surface 2b of the first arm 2 are formed. As shown in Fig. 4, the inclined section 202 bends in a direction in which the bundle of connecting members 10 is extended from the side wall surface 2b of the first arm 2 around to below the motor 12. In the base section 201, screw holes 212b for fixing the band part 21b to the guide part 21a are formed. The bundle of connecting members 10 is fixed along the base section 201 by the band part 21b and a fixing band 22. The fixing band 22 is fixed to the side wall surface 2b of the first arm 2 by screws.

As shown in Fig. 4, the battery 51 is held by the battery holding part 50 on the side wall surface 2b of the first arm 2 in parallel to the rotation shaft of the first arm 2. The side wall surface 2b of the first arm 2 is exposed from an opening part 2c of the first arm 2 when a cover (not shown) is detached, and the battery holding part 50 and the battery 51 are also exposed when the cover (not shown) is detached. The cover is attached to the opening part 2c of the first arm 2, and thereby, the battery 51, the battery holding part 50, and the bundle of connecting members 10 are hidden like the opposite side shown in Figs. 1A and 1B. Note that a cover covering the opposite side of the first arm 2 shown in Figs. 1A and 1B hides the pulley, the pulley belt, etc.

The backup circuit board 40 shown in Fig. 4 is a board for supplying power to the encoders respectively provided for the motors that rotate the respective arms. The output of the encoder to which the power is supplied from the backup circuit board 40 shows a rotation angle of the motor. The rotation angles of the motors are stored as positions of the respective arms. The positions of the respective arms are determined by the rotation angles of the motors that rotate the respective arms, and, when power supply to the encoders of the motors is ceased, it is impossible to specify the positions of the respective arms. The power necessary for the operation of the backup circuit board 40 is supplied by the battery 51. In a region exposed from the opening part 2c of the first arm 2, the backup circuit board 40 is fixed to the base member 2a shown in Fig. 2 by the metal plate and located between the bundle of connecting members 10 and the base member 2a.

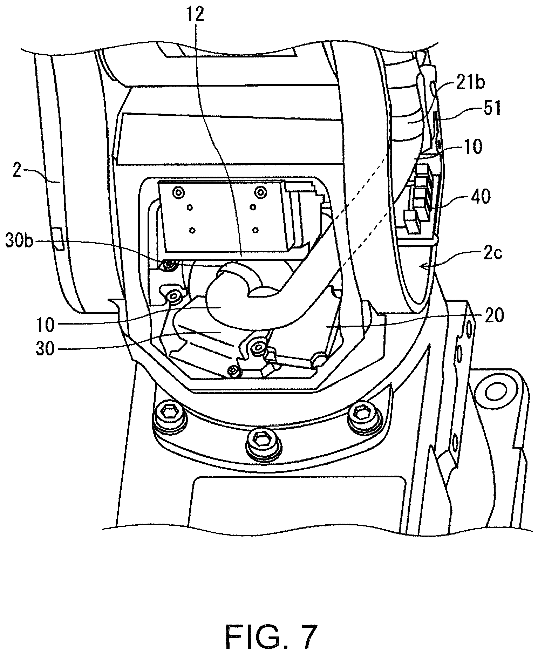

The position control unit 20 shown in Figs. 2, 3, 4, and 7 includes the crystal oscillator gyroscope, a board on which its peripheral circuit is mounted, and a package . The bundle of connecting members 10 is drawn up from the base surface above the position control unit 20 by the fixing plate 30 as shown in Fig. 2 , and does not interfere with the position control unit 20.

### 3. Operation

The motor of the drive part 11 provided in the base 1 rotates the first arm 2 with respect to the base 1. The position control unit 20 including the crystal oscillator gyroscope detects the angular velocity of the first arm 2. The motor 12 provided in the first arm 2 rotates the second arm 3 with respect to the first arm 2. The motor provided in the second arm 3 rotates the third arm 4 with respect to the second arm 3. The motor provided in the third arm 4 rotates the fourth arm 5 with respect to the third arm 4. The motor provided in the fourth arm 5 rotates the fifth arm 6 with respect to the fourth arm 5. The motor provided in the fifth arm 6 rotates the sixth arm 7 with respect to the fifth arm 6. An actuator that is activated by air pressure is provided in the sixth arm 7, and a hand (not shown) is driven by the actuator. The bundle of connecting members 10 in which the electric wires extending from the motors, the rotary encoders, and the sensors of the respective arms are bound transmits various signals as noise for the position control unit 20.

When the first arm 2 rotates with respect to the base 1, the bundle of connecting members 10 is twisted and moved. According to the example, the route of the bundle of connecting members 10 is determined by the fixing plates 30, 21a, and, even when the first arm 2 rotates with respect to the base 1, the bundle of connecting members 10 does not interfere with the position control unit 20. Therefore, noise of the crystal oscillator gyroscope of the position control unit 20 does not increase when the bundle of connecting members 10 and the position control unit 20 come into contact, or the crystal oscillator gyroscope does not detect the angular velocity of the vibration generated by the bundle of connecting members 10 into contact with the position control unit 20.

Further, the bundle of connecting members 10 may be guided by the fixing plates 30, 21 so that the effective empty space may be formed around, and thereby, the backup circuit board 40 and the position control unit 20 may be fixed to the base member 2a of the first arm 2 without overlap. Furthermore, the backup circuit board 40 and the position control unit 20 are exposed from the opening of the first arm 2, and thereby, maintenance of the backup circuit board 40 and the position control unit 20 is easier.

### 4. Other Embodiments

The technological range of the invention is not limited to the above described example and, obviously, various changes may be made without departing from the scope of the invention.

For example, the number of arms forming the manipulator may be one or more, or the invention may be applied to a translation arm. Further, the movement of the arm with respect to the base is not limited to rotation but may be telescopic or translation. Furthermore, the connecting member may be an oil tube of an oil-hydraulic circuit. For example, the air tube connecting the actuator and the compressor for driving the hand with air pressure may be replaced by an oil tube for driving the hand with oil pressure. The inertial sensor may be a capacitor type or an acceleration sensor. Further, the inertial sensor may be fixed to the side wall surface perpendicular to the base surface.

The illustrated route of the connecting members is just an example, and may be appropriately designed in response to the shape of the arms and the arrangement and shapes of the motors and the inertial sensor. Further, in place of the fixing plates for determining the route of the connecting members, the connecting members may be directly fixed to the wall surfaces of the arm using bands of resin or metal. In this case, the connecting members may be guided by the wall surfaces of the arms. Furthermore, the guide parts of the inclined surfaces of the fixing plates or the like may be formed by flat surfaces or curved surfaces.

## Claims

1. A robot comprising:
a base (1);
an arm (2, 3, ..., 7) provided on the base (1);
a connecting member (10) provided in an interior of the base (1) and an interior of the arm (2, 3, ..., 7);
a first fixing member (30) that fixes the connecting member (10) in the interior of the arm (2, 3, ..., 7) and guides the connecting member (10) in the interior of the arm (2, 3, ..., 7); and
an inertial sensor,
wherein the inertial sensor is not in contact with the connecting member (10),
**characterized in that**
the first fixing member (30) includes a guide part (30a) that guides the connecting member (10) to a route apart from an inner wall surface of the arm (2, 3, ..., 7), and
the inertial sensor is provided between the connecting member (10) and the inner wall surface of the arm (2, 3, ..., 7) .

2. The robot according to claim 1, further comprising:
a rotation shaft member (60) fixed to the arm (2, 3, ..., 7) and having a through hole (60b) for communication between the interior of the base (1) and the interior of the arm (2, 3, ..., 7); and
a drive part (11) that is provided in the base (1) and rotates the arm (2, 3, ..., 7) with the rotation shaft member (60),
wherein the connecting member (10) passes the through hole (60b).

3. The robot according to claim 2, wherein the inner wall surface of the arm (2, 3, ..., 7) includes a base surface (2d) having an opening at least partially overlapping with the through hole (60b) of the rotation shaft member (60) as seen from a rotation shaft direction of the rotation shaft member (60),
the first fixing member (30) and the inertial sensor are fixed to the base surface (2d), and
the guide part (30a) is an inclined surface for drawing up the connecting member (10) from the base surface (2d).

4. The robot according to claim 3, further comprising:
a backup circuit board (40) fixed to the base surface (2d) for storing positions of the arm (2, 3, ..., 7); and
a battery holding part that is provided in the interior of the arm (2, 3, ..., 7) and holds a battery of the backup circuit board (40),
wherein the backup circuit board (40) is provided between the connecting member (10) and the base surface (2d).

5. The robot according to claim 3, wherein the first fixing member (30) includes a second fixing member (21) that fixes the connecting member (10) to a side wall surface of the arm (2, 3, ..., 7).

6. The robot according to any one of claims 1 to 5, wherein the arm (2, 3, ..., 7) has an opening part (2c) that can be opened and closed for exposing the battery holding part.

7. The robot according to any one of claims 1 to 6, wherein the inertial sensor is a crystal oscillator gyroscope.

## Patentansprüche

1. Roboter, umfassend:
eine Basis (1);
einen Arm (2, 3, ..., 7), der auf der Basis vorgesehen ist (1);
ein Verbindungsglied (10), das in einem Inneren der Basis (1) und einem Inneren des Arms (2, 3, ..., 7) vorgesehen ist;
ein erstes Befestigungsglied (30), das das Verbindungsglied (10) im Inneren des Arms (2, 3, ..., 7) befestigt und das Verbindungsglied (10) ins Innere des Arms (2, 3, ...,7) führt; und
einen Inertialsensor,
wobei der Inertialsensor nicht in Kontakt mit dem Verbindungsglied (10) ist,
**dadurch gekennzeichnet, dass**
das erste Befestigungsglied (30) einen Führungsteil (30a) aufweist, der das Verbindungsglied (10) auf einen Weg weg von einer Innenwandoberfläche des Arms (2, 3, ..., 7) führt, und
der Inertialsensor zwischen dem Verbindungsglied (10) und der Innenwandoberfläche des Arms (2, 3, ..., 7) vorgesehen ist.

2. Roboter nach Anspruch 1, weiter umfassend:
ein Drehachsenglied (60), das am Arm (2, 3, ...,7) befestigt ist und ein Durchgangsloch (60b) zur Kommunikation zwischen dem Inneren der Basis (1) und dem Inneren des Arms (2, 3, ..., 7) hat; und
einen Antriebsteil (11), der in der Basis (1) vorgesehen ist und den Arm (2, 3, ...,7) mit dem Drehachsenglied (60) dreht,
wobei das Verbindungsglied (10) durch das Durchgangsloch (60b) ragt.

3. Roboter nach Anspruch 2, wobei die Innenwandoberfläche des Arms (2, 3, ...,7) eine Basisoberfläche (2d) aufweist, die eine Öffnung hat, die sich zumindest zum Teil mit dem Durchgangsloch (60b) des Drehachsenglieds (60) überschneidet, aus einer Drehachsenrichtung des Drehachsenglieds (60) gesehen,
das erste Befestigungsglied (30) und der Inertialsensor an der Basisoberfläche (2d) befestigt sind, und
der Führungsteil (30a) eine geneigte Oberfläche zum Hochziehen des Verbindungsglieds (10) von der Basisoberfläche (2d) ist.

4. Roboter nach Anspruch 3, weiter umfassend:
eine Sicherungs-Leiterplatte (40), die an der Basisoberfläche (2d) befestigt ist, zum Speichern von Positionen des Arms (2, 3, ...,7); und
einen Batteriehalteteil, der im Inneren des Arms (2, 3, ..., 7) vorgesehen ist und eine Batterie der Sicherungs-Leiterplatte (40) hält,
wobei die Sicherungs-Leiterplatte (40) zwischen dem Verbindungsglied (10) und der Basisoberfläche (2d) vorgesehen ist.

5. Roboter nach Anspruch 3, wobei das erste Befestigungsglied (30) ein zweites Befestigungsglied (21) aufweist, das das Verbindungsglied (10) an einer Seitenwandoberfläche des Arms (2, 3, ..., 7) befestigt.

6. Roboter nach einem der Ansprüche 1 bis 5, wobei der Arm (2, 3, ..., 7) einen Öffnungsteil (2c) hat, der zum Freilegen des Batteriehalteteils geöffnet und geschlossen werden kann.

7. Roboter nach einem der Ansprüche 1 bis 6, wobei der Inertialsensor ein Kristalloszillator-Gyroskop ist.

## Revendications

1. Robot comprenant:
une base (1) ;
un bras (2, 3, ..., 7) prévu sur la base (1) ;
un élément de liaison (10) prévu dans un intérieur de la base (1) et un intérieur du bras (2, 3, ..., 7) ;
un premier élément de fixation (30) qui fixe l'élément de liaison (10) dans l'intérieur du bras (2, 3, ..., 7) et guide l'élément de liaison (10) dans l'intérieur du bras (2, 3, ..., 7) ; et
un capteur inertiel,
dans lequel le capteur inertiel n'est pas en contact avec l'élément de liaison (10),
**caractérisé en ce que**
le premier élément de fixation (30) inclut une partie de guidage (30a) qui guide l'élément de liaison (10) vers un trajet à distance d'une surface de paroi interne du bras (2, 3, ..., 7), et
le capteur inertiel est prévu entre l'élément de liaison (10) et la surface de paroi interne du bras (2, 3, ..., 7).

2. Robot selon la revendication 1, comprenant en outre :
un élément formant arbre de rotation (60) fixé au bras (2, 3, ..., 7) et ayant un trou traversant (60b) pour la communication entre l'intérieur de la base (1) et l'intérieur du bras (2, 3, ..., 7) ; et
une partie d'entraînement (11) qui est prévue dans la base (1) et fait tourner le bras (2, 3, ..., 7) avec l'élément formant arbre de rotation (60),
dans lequel l'élément de liaison (10) passe dans le trou traversant (60b).

3. Robot selon la revendication 2, dans lequel la surface de paroi interne du bras (2, 3, ..., 7) inclut une surface de base (2d) ayant une ouverture chevauchant au moins partiellement le trou traversant (60b) de l'élément formant arbre de rotation (60) telle que vue à partir d'une direction d'arbre de rotation de l'élément formant arbre de rotation (60),
le premier élément de fixation (30) et le capteur inertiel sont fixés à la surface de base (2d), et
la partie de guidage (30a) est une surface inclinée pour tirer l'élément de liaison (10) à partir de la surface de base (2d).

4. Robot selon la revendication 3, comprenant en outre :
une carte de circuit imprimé de sauvegarde (40) fixée à la surface de base (2d) pour stocker des positions du bras (2, 3, ..., 7) ; et
une partie de maintien de batterie qui est prévue dans l'intérieur du bras (2, 3, ..., 7) et maintient une batterie de la carte de circuit imprimé de sauvegarde (40),
dans lequel la carte de circuit imprimé de sauvegarde (40) est prévue entre l'élément de liaison (10) et la surface de base (2d).

5. Robot selon la revendication 3, dans lequel le premier élément de fixation (30) inclut un second élément de fixation (21) qui fixe l'élément de liaison (10) à une surface de paroi latérale du bras (2, 3, ..., 7).

6. Robot selon l'une quelconque des revendications 1 à 5, dans lequel le bras (2, 3, ..., 7) a une partie d'ouverture (2c) qui peut être ouverte et fermée pour exposer la partie de maintien de batterie.

7. Robot selon l'une quelconque des revendications 1 à 6, dans lequel le capteur inertiel est un gyroscope à oscillation à quartz.
